# EUROPEAN PATENT APPLICATION

(11) **EP 1 521 150 A2**
(43) Date of publication of application: **06.04.2005**
(21) Application number: 04255780.1
(22) Date of filing: 22.09.2004
(51) Int. Cl.: G05B 19/402

(54) **Numerical controller for finishing a gear**

(30) Priority: 03.10.2003 JP 2003345264
(71) Applicant: FANUC LTD, Minamitsuru-gun, Yamanashi 401-0597 (JP)
(72) Inventor: Endo, Takahiko, Tokyo 185-0005 (JP); Yamamuro, Kouji FANUC, Minamitsuru-gun Yamanashi 401-0511 (JP)
(74) Representative: Billington, Lawrence Emlyn

(57) **Abstract**

A numerical controller capable of reducing machining time in synchronization control machining. A workpiece (1) already rough-machined into a shape of a gear, and a tool (2), are rotated in synchronism. Proximity limit distance Lt ensuring that the workpiece (1) and the tool (2) do not interfere with each other, approach amount Ap required to bring the workpiece (1) and the tool (2) into a positional relationship for performing normal gear machining (condition in which the workpiece engages with the tool), and phase shift amount Fs corresponding to the depth of cut are given as commands. In parallel with approach motion, phase adjustment motion for making the workpiece (1) face a tooth space of the tool (2) is performed. When the approach motion progresses by the proximity limit distance Lt, if the phase adjustment is completed, the approach motion is continued without interruption. If not, the approach motion is interrupted, and resumed after the phase adjustment is completed. After the approach motion is completed, phase shift is performed to give a cut, and machining is performed. When cutting loads become a certain value or smaller, it is determined that the machining is completed. Since the approach motion and the phase adjustment are performed concurrently and completion of machining is automatically determined, the machining time can be reduced.

## Description

### BACKGROUND OF THE INVENTION

### 1. Field of the Invention

The invention relates to a numerical controller for controlling a machine tool arranged to synchronize a workpiece and a tool for machining the workpiece, in particular to a numerical controller suitable for finishing a gear.

### 2. Description of Related Art

In synchronization control machining in which a workpiece is machined with a tool for gear machining while the workpiece and the tool are synchronization-controlled, when the depth of cut is to be changed during the synchronization control, it is performed as follows: After phase adjustment of a tool axis and a workpiece axis is completed, the tool axis and the workpiece axis are brought closer to each other (approach motion). After the approach motion is completed, the depth of cut is given to the workpiece axis through manual operation or by a PC (programmable controller), so that the phase of the tool axis and the phase of the workpiece axis are shifted according to the depth of cut given. Further, actual machining goes to the next stage (next cutting) depending solely on machining time, regardless of actual machining amount.

Conventionally, after the phase adjustment is completed, a command for bringing the tool axis and the workpiece axis closer to each other (approach command) is given externally, and after the workpiece axis is brought closer to the tool axis to be at a distance intended for machining (namely, the approach motion is completed), the depth of cut is given as a command externally. This takes time.

When the depth of cut is given through manual operation, an operator needs to give a cut manually for each stage of machining. This makes machining time longer, and errors may be produced by inaccurate manual operation or the like.

Further, completion of gear machining cannot be determined accurately. Hence, whether the present machining has finished or not is determined depending on whether the machining has been continued for a predetermined time or not. This mean that idle machining continues after the machining actually finishes, which also makes the machining time longer.

### SUMMARY OF THE INVENTION

The invention provides a numerical controller capable of shortening machining time by performing an approach motion and a phase adjustment motion concurrently and also shortening the machining time by accurately determining completion of machining.

A numerical controller of the present invention controls a workpiece axis on which a workpiece of a rough-machined gear is mounted and a tool axis on which a cutting tool for finishing the workpiece is mounted, according to a machining program so as to perform finishing of the workpiece by the cutting tool. The numerical controller comprises: synchronization control means for synchronizing rotations of the tool axis and the workpiece axis; phase adjustment control means for adjusting rotational phases of the tool axis and the workpiece axis in synchronized rotations of the tool axis and the workpiece axis; approach control means for controlling an approach motion for moving the workpiece axis and the tool axis close to each other to have relative positions for performing the finishing, according to a commanded motion amount or a commanded relative position; means for starting the phase adjustment control means and the approach control means to perform the phase adjustment and the approach motion concurrently; means for suspending the approach motion when the phase adjustment is not completed before the approach motion progresses by a proximity limit distance within which the workpiece and the cutting tool do not interfere with each other; means for resuming the approach motion when the phase adjustment is completed; and means for shifting the rotational phase of the tool axis relative to the rotational phase of the workpiece axis by a phase shift amount commanded in the machining program to provide a depth of cut for the finishing after the approach motion is completed.

The numerical controller may further comprise means for detecting a cutting load acting on the tool axis and the workpiece axis during the finishing, and means for terminating the finishing when the detected cutting load become equal to or less than a predetermined value.

With the above constitution, the phase adjustment and the approach motion are performed simultaneously and concurrently, so that the machining time is reduced. Further, since the completion of machining is automatically detected, wasteful idle-machining time is removed, so that the machining time is reduced.

### BRIEF DESCRIPTION OF THE DRAWINGS

FIG. 1 is a block diagram showing relevant parts of a numerical controller according to an embodiment of the invention;
FIG. 2 is an illustration showing an example of gear machining in the embodiment;
FIG. 3 is an illustration for explaining phase shift amount;
FIG. 4 is an illustration for explaining approach amount and proximity limit distance,
FIG. 5 is a part of a flow chart showing the process of synchronization control machining in the embodiment;
FIG. 6 is a subsequent part of the flow chart showing the process of synchronization control machining in the embodiment.

### DETAILED DESCRIPTION

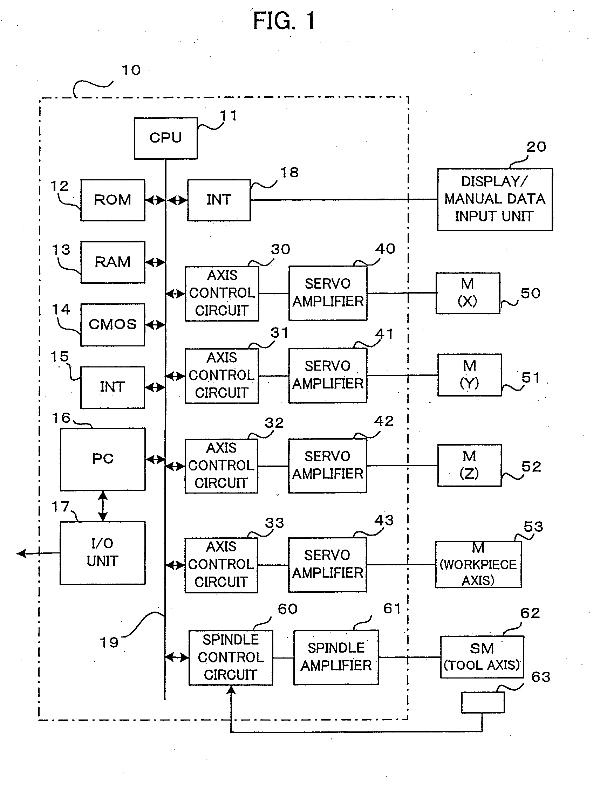

FIG. 1 is a block diagram showing relevant parts of a numerical controller 10 according to an embodiment of the invention. A CPU 11 is a processor that controls the numerical controller 10 as a whole. The CPU 11 reads system programs stored in ROM 12 through a bus 19, and controls the numerical controller 10 as a whole according to the system programs. In RAM 13 is stored temporary calculation data, display data, and data of various kinds entered by an operator using a display/manual data input unit 20. The display/manual data input unit 20 comprises a display such as a CRT display or a liquid crystal display and a manual input means such as a keyboard. CMOS memory 14 is nonvolatile memory backed up by batteries not shown to maintain data stored even when power supplied to the numerical controller 10 is turned off. In the CMOS memory 14 are stored machining programs read through an interface 15, machining programs entered using the display/manual data input unit 20, etc.

By means of the interface 15, external devices can be connected to the numerical controller 10. A PC (programmable controller) 16 controls a machine tool by sending signals to auxiliary devices for the machine tool through an I/O unit 17 according to a sequence program stored in the numerical controller 10. The PC also receives signals from various switches and the like on an operation panel provided on the main body of the machine tool controlled by the numerical controller, performs necessary signal-processing on them and transmits them to the CPU 11.

The present embodiment has servomotors 50, 51, 52 for feed axes for moving a workpiece in mutually perpendicular X-axis direction, Y-axis direction and Z-axis direction, and a servomotor 53 for a workpiece axis for rotating the workpiece. Each of axis control circuits 30 to 33 for drive-controlling these servomotors receives a motion amount command for its associated axis from the CPU 11, and feeds a command for its associated axis to its associated one of servo amplifiers 40 to 43. Receiving the command, each of the servo amplifiers 40 to 43 controls its associated one of the servomotors 50 to 53 for its associated axis. It is to be noted that in the present invention, the axis control circuit 33 for driving the workpiece axis to rotate has a present position storing counter for storing the rotational position of the workpiece axis. The present position storing counter accumulates the commanded motion amounts, and is reset to "0" when the motion amount accumulated reaches a value corresponding to one revolution of the workpiece axis. The present position storing counter is reset in advance when the workpiece axis is placed in an origin position, which is called origin-resetting. The servomotors 50 to 53 each includes a position-speed detector, which feeds a position feedback signal and a speed feedback signal back to an associated one of the axis control circuits 30 to 33 to perform position·speed feedback control. In FIG. 1, the position·speed feedback is omitted.

A spindle control circuit 60 receives a spindle rotation command, and sends a spindle speed signal to a spindle amplifier 61. Receiving the spindle speed signal, the spindle amplifier 61 makes a spindle motor 62 rotate at a rotational speed given by the spindle speed signal. A position coder 63 feeds a feedback pulse back to the spindle control circuit 60 in synchronization with rotation of the spindle motor 62 to perform speed control. Like the axis control circuit 33 for drive-controlling the workpiece axis, the spindle control circuit 60 has a present position storing counter for storing the rotational position of a spindle. The present position storing counter is reset to "0" when the spindle is placed in an origin position, which is called origin-resetting. In position control mode, the present position storing counter is reset to "0" each time the commanded motion amounts for the spindle reaches a value corresponding to one revolution of the spindle. Thus, the present position of the spindle is stored in this counter.

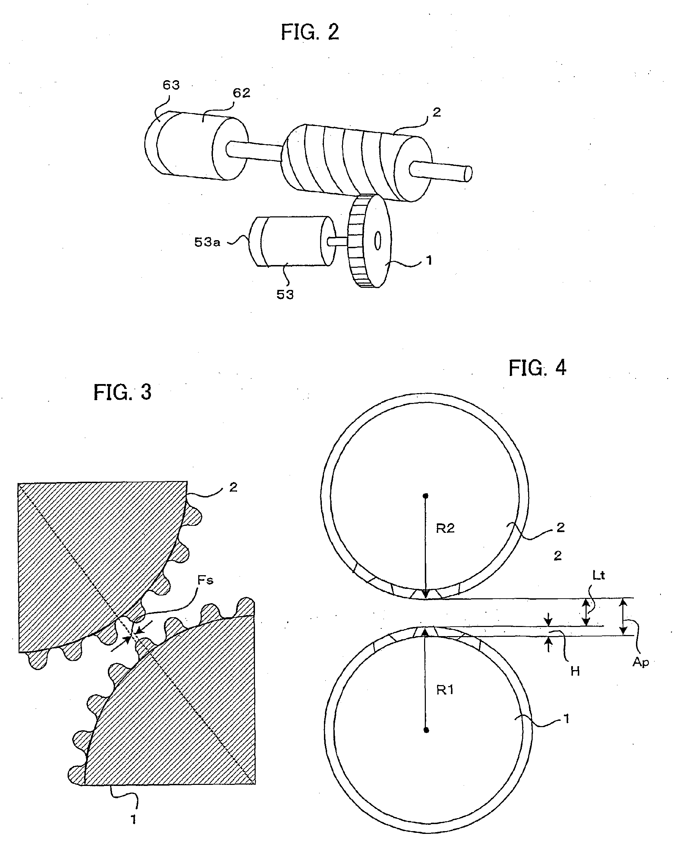

FIG. 2 is an illustration showing an example in which a rough-machined gear is finish-machined in the present embodiment. In the embodiment, the spindle is a tool axis. A tool 2 for gear finishing is fitted on the tool axis, which is driven by the spindle motor 62. A rotary axis driven by the servomotor 53 to rotate is a workpiece axis. A workpiece 1 is fitted on the workpiece axis. The workpiece 1 has already been rough-machined and has a shape of a gear. By adjusting the phases of the tool axis and the workpiece axis, the workpiece (rough-machined gear) 1 can fit in a tooth space of the cutting tool. By shining the phases, a cut is given and the way in which the workpiece engages with the tool is changed. Then by rotating the tool axis and the workpiece axis in synchronization, the workpiece (rough-machined gear) 1 is machined. In FIG. 2, reference sign 53a denotes a position/speed detector for detecting the rotational position and the speed of the servomotor 53 to detect the rotational position and the speed of the workpiece axis.

FIGS. 3 and 4 are illustrations for explaining phase shift amount Fs, approach amount Ap and proximity limit distance Lt relevant to the present invention.

As shown in FIG. 4, the approach amount Ap is a motion amount required to bring the tool axis and the workpiece axis into a positional relationship for performing normal machining. In FIG. 4, when the workpiece 1 is moved by performing approach motion by the approach amount Ap, or in other words when approach motion is completed, the workpiece 1, i.e., the rough-machined gear fits in a tooth space of the tool 2. Let R1 be a radius of a circle connecting edges of teeth of the rough-machined gear, i.e., the workpiece 1, R2 a radius of a circle connecting edges of the teeth of the tool 2, and H the height of the teeth of the workpiece 1. When the approach motion is completed, the distance between the tool axis and the workpiece axis is (R1+R2-H).

The proximity limit distance Lt is a motion amount limit ensuring that the workpiece 1 and the tool 2 do not interfere with each other. In other words, the proximity limit distance Lt is a distance of the approach motion when the approach motion progresses until just before the edge of the teeth of the workpiece and the edge of the teeth of the tool 2 touch each other, as shown in FIG. 4. Thus, when the approach motion progresses by the proximity limit distance Lt, the distance between the tool axis and the workpiece axis is slightly larger than (R1+R2).

The phase shift amount Fs gives a depth of cut for machining. Specifically, the phase shift amount Fs is an amount corresponding to a depth of cut, by which amount the workpiece 1 is rotated relatively to the tool 2 from the positional relationship in which the phases of the workpiece axis and the tool axis are adjusted, namely the teeth of the workpiece 1 fit in teeth spaces of the tool 2. In other words, the phase shift amount Fs is an amount by which the phase of the workpiece 1 is shifted relatively to the phase of the tool 2. FIG. 3 is an illustration for explaining the phase shift amount Fs. FIG. 3 shows a positional relationship after the workpiece 1 is shifted relatively to the tool 2 by the phase shift amount Fs from the positional relationship in which the phases are adjusted, although FIG. 3 shows it in the condition that the teeth of the workpiece 1 do not fit in the teeth spaces of the tool 2. Actually, the workpiece 1 is shifted relatively to the tool 2 by the phase shift amount Fs in the condition that the teeth of the workpiece 1 fit in the teeth spaces of the tool 2.

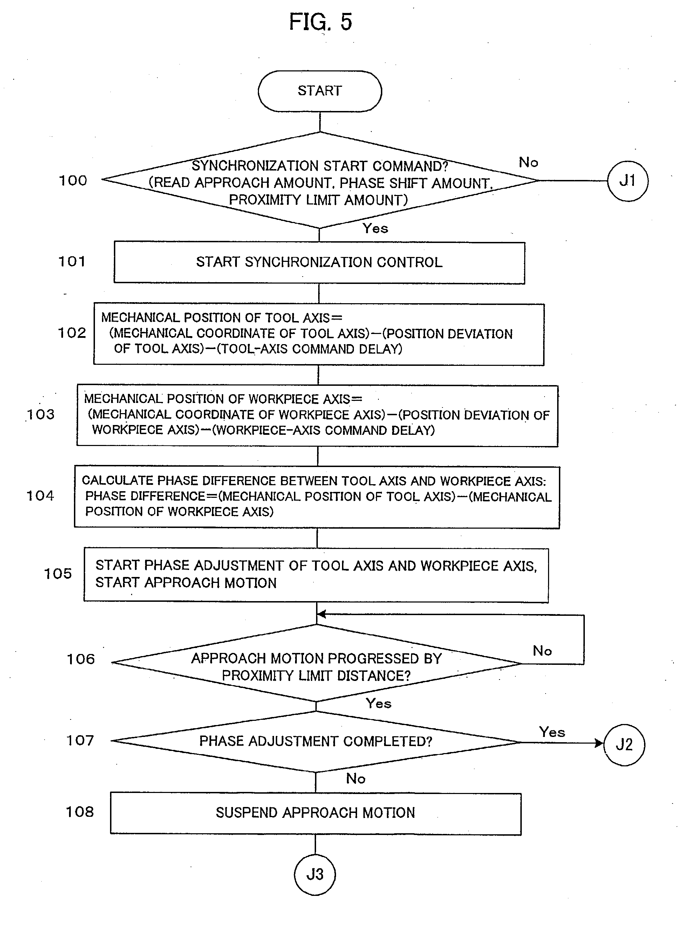

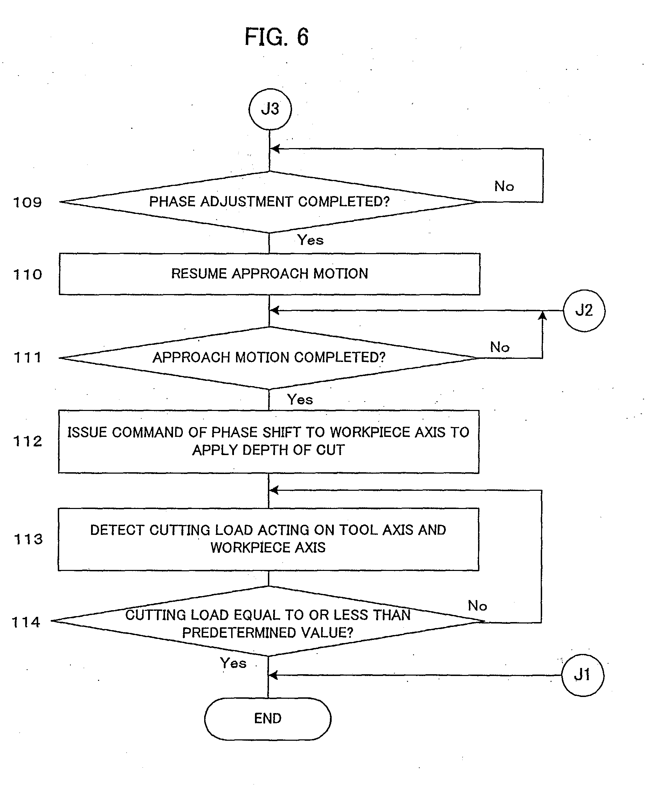

FIGS. 5 and 6 are a flow chart showing the process of this gear finishing.

The processor 11 of the numerical controller 10 reads one block from a machining program and determines whether the command in the block is a synchronization start command or not (Step 100). If not, the processor 11 does not perform the process shown in FIGS. 5 and 6 but executes another process not shown according to the command in the block.

If it is a synchronization start command, the processor 11 reads the approach amount Ap, the phase shift amount Fs, and the proximity limit amount Lt given with the synchronization start command. It is to be noted that before the synchronization start command is given, the workpiece axis (workpiece 1) has been placed in a predetermined positional relationship with the tool axis (tool), as shown in FIG. 4.

The spindle is switched to position control mode, and a motion command is given to the axis control circuit 33 for the workpiece axis to make the rotational speed of the workpiece axis equal to that of the spindle (tool axis). The servomotor 53 for the workpiece axis is driven and the synchronization control is started (Step 101).

Next, a mechanical position, i.e. a rotational position of the tool axis (spindle axis) is obtained. A rotational position, namely a mechanical position commanded for the tool axis (spindle axis) is read from the present position storing counter. Further, a position deviation of the tool axis is read from an error register for storing the position deviation. The position deviation is a difference between the commanded position and the actual position in the position loop control. Further, a tool-axis command delay, i.e. a delay of the tool axis with respect to the command position due to acceleration/deceleration control, etc. is read from an acceleration/deceleration control section. By subtracting the tool-axis position deviation and the tool-axis command delay from the read present mechanical position, the actual mechanical position of the tool axis (spindle axis), namely the actual rotational position of the tool axis is obtained (Step 102).

Likewise, the present mechanical position of the workpiece axis is read from the present position storing counter that stores the mechanical position (rotational position) given as a command for the workpiece axis (servo axis). Further, position deviation of the workpiece axis is read from an error register storing it, and workpiece-axis command delay due to acceleration/deceleration control or the like is read from an acceleration/deceleration control part. By subtracting the workpiece-axis position deviation and the workpiece-axis command delay from the present mechanical position, the actual mechanical position of the workpiece axis (servo axis), namely the actual rotational position of the workpiece axis is obtained (Step 103).

By subtracting the mechanical position of the workpiece axis from the mechanical position of the tool axis thus obtained, the phase difference between the tool axis and the workpiece axis is obtained (Step 104).

Then, motion for phase adjustment of the workpiece axis and the tool axis, and approach motion are started (Step 105). In the phase adjustment motion, a motion amount that is smaller or larger by the amount corresponding to the phase difference calculated than a motion amount given to the tool axis (spindle) is given to the axis control circuit 33 for the workpiece axis, so that the servomotor 53 for the workpiece axis is driven to achieve the phase adjustment of the workpiece axis and the tool axis. In the approach motion, the servomotors 50 to 52 for moving the workpiece 1 (workpiece axis) in X-axis direction, Y-axis direction and Z-axis direction are driven to make the workpiece 1 (workpiece axis) move by the approach amount Ap read in Step 100.

Then, it is determined whether or not the approach motion has progressed by the proximity limit distance Lt read in Step 100 (Step 106). Until the approach motion progresses by the proximity limit distance Lt, the approach motion and the phase adjustment motion are continued.

When the approach motion has progressed by the proximity limit distance Lt, it is determined whether or not the phase adjustment has been completed (Step 107). In other words, it is determined whether or not the workpiece axis has been shifted (rotated) relatively to the tool axis by the amount corresponding to the phase difference obtained (in FIG. 104) is determined. If the phase adjustment has been completed, Step 111 is performed. If not, the approach motion is suspended (Step 108). This is because if the approach motion is continued and the workpiece axis and the tool axis are brought closer to each other by an amount exceeding the proximity limit distance Lt, the workpiece 1 and the tool 2 interfere with each other. The approach motion is interrupted until the phase adjustment is completed (Step 109).

After the phase adjustment is completed, the approach motion is resumed (Step 110). The next step is not performed until the approach motion is completed (Step 111). Since the phases of the workpiece axis and the tool axis are adjusted, the workpiece 1 engages with the tool 2, namely the teeth of the workpiece 1 fit in teeth spaces of the tool 2. After the approach motion is completed, the workpiece axis is rotated by the phase shift amount read in Step 100, so that the phase of the workpiece 1 is shifted relatively to the phase of the tool 2. By this, a depth of cut is applied, and the tool 2 performs gear finishing on the workpiece 1 with the depth of cut (Step 112).

During this gear finishing, the processor 11 detects a cutting load acting on the tool axis and the workpiece axis (Step 113), and it is determined whether or not the cutting load is equal to or less than a predetermined value (Step 114). The cutting load may be detected by detecting a driving current flowing through the spindle motor 62 for driving the tool axis or a driving current flowing through the servomotor 53 for driving the workpiece axis. Alternatively, the cutting load may be estimated with a known disturbance estimation observer, which is built into the spindle control circuit 60 or the axis control circuit 33.

While the tool 2 is machining the workpiece 1, the cutting loads are at a certain level or higher. However, when gear machining on the workpiece 1 is completed, the cutting loads are no longer exerted on the tool 2 and the workpiece 1, so that loads exerted on the tool axis and the workpiece axis (the values of driving currents or the estimated disturbance values) are a certain value or smaller. By finding that the loads are a certain value or smaller, the completion of machining is automatically detected, and gear finishing on the workpiece 1 is terminated.

As described above, in the present embodiment, the approach motion and the phase adjustment motion are started simultaneously and performed concurrently. If the phase adjustment is not completed when the approach motion progresses by the proximity limit distance Lt beyond which the tool and the workpiece interfere with each other, the approach motion is interrupted until the phase adjustment is completed. If the phase adjustment is completed when the approach motion progresses by the proximity limit distance Lt, the approach motion is continued without interruption. When the phase adjustment and the approach motion are completed, the phase shift amount is given to give a cut, and machining is started. Cutting loads are monitored until after the machining finishes. The completion of the machining is automatically detected by finding that the cutting loads monitored have become a certain value or smaller.

Since the approach motion and the phase adjustment motion are performed concurrently, the machining time can be reduced. Further, since it is arranged that the completion of machining can be automatically detected, the completion of machining can be determined accurately and wasteful motion after the completion of machining (rotational engaging motion of the tool and the workpiece without effects of machining) can be removed, and hence the machining time can be reduced.

While the embodiment described above is an example of gear machining, the present invention can be applied to synchronization control machining other than the gear machining to perform the approach motion and the phase adjustment motion concurrently to reduce the machining time.

## Claims

1. A numerical controller for controlling a workpiece axis on which a workpiece of a rough-machined gear is mounted and a tool axis on which a cutting tool for finishing the workpiece is mounted, according to a machining program so as to perform finishing of the workpiece by the cutting tool, said numerical controller comprising:
synchronization control means for synchronizing rotations of the tool axis and the workpiece axis;
phase adjustment control means for adjusting rotational phases of the tool axis and the workpiece axis in synchronized rotations of the tool axis and the workpiece axis;
approach control means for controlling an approach motion for moving the workpiece axis and the tool axis close to each other to have relative positions for performing the finishing, according to a commanded motion amount or a commanded relative position;
means for starting said phase adjustment control means and said approach control means to perform the phase adjustment and the approach motion concurrently;
means for suspending the approach motion when the phase adjustment is not completed before the approach motion progresses by a proximity limit distance within which the workpiece and the cutting tool do not interfere with each other;
means for resuming the approach motion when the phase adjustment is completed; and
means for shifting the rotational phase of the tool axis relative to the rotational phase of the workpiece axis by a phase shift amount commanded in the machining program to provide a depth of cut for the finishing after the approach motion is completed.

2. A numerical controller according to claim 1, further comprising means for detecting a cutting load acting on the tool axis and the workpiece axis during the finishing, and means for terminating the finishing when the detected cutting load become equal to or less than a predetermined value.
